# EUROPÄISCHE PATENTSCHRIFT

(11) **EP 0 617 587 B1**
(45) Veröffentlichungstag und Bekanntmachung des Hinweises auf die Patenterteilung: **24.04.1996**
(21) Anmeldenummer: 93918864.5
(22) Anmeldetag: 07.09.1993
(51) Int. Cl.: A47J 37/07

(54) **HORIZONTAL UND VERTIKAL BEWEGBARER BRATROST**
HORIZONTALLY AND VERTICALLY MOVABLE GRIDIRON
GRIL DEPLACABLE VERTICALEMENT ET HORIZONTALEMENT

(30) Priorität: 09.09.1992 CH 2841/92
(43) Veröffentlichungstag der Anmeldung: 05.10.1994
(73) Patentinhaber: BÜRGE, Philippe, CH-9527 Niederhelfenswil (CH); BÜRGE, Patricia, CH-9527 Niederhelfenswil (CH)
(72) Erfinder: BÜRGE, Philippe, CH-9527 Niederhelfenswil (CH); BÜRGE, Patricia, CH-9527 Niederhelfenswil (CH)
(74) Vertreter: Legland, Brynjulv
(86) Internationale Anmeldenummer: CH9300218
(87) Internationale Veröffentlichungsnummer: WO9405192

(56) Entgegenhaltungen:
- DE-A- 2 849 243
- US-A- 3 067 734
- US-A- 3 498 210
- US-A- 4 363 313

## Beschreibung

Die Erfindung betrifft einen Bratrost gemäss dem Oberbegriff des ersten Patentanspruches.

Eine derartige Ausführung ist in DE-A-2 849 243 offenbart, die aber nur zweihändig zu bedienen ist, wobei die eine Hand für den Griff und die andere zur Arretierung benötigt wird. Ein weiterer Nachteil dieser Ausführung besteht darin, dass der Griff einstückig mit einem der Parallelteile ausgebildet ist, so dass er in den beiden Endstellungen beinahe vertikal nach oben oder nach unten gerichtet und somit schwer bzw. unbequem zu fassen ist. Ferner ist der Schwenkradius des Rosts begrenzt bzw. nicht erweiterbar.

In der US-A-3 067 734 ist eine weitere, jedoch sehr komplizierte Ausführung beschrieben, welche die gleichen Nachteile wie die beschriebene DE-A-2 849 243 aufweist.

Ein weiterer Nachteil der bestehenden Ausführungen besteht darin, dass sie keine Möglickkeiten bieten, das Bratgut warmzuhalten oder beispielsweise Gemüse zu rösten, das nur eine relativ tiefe Temperatur erfordert.

Aufgabe der Erfindung ist somit die Schaffung eines Rostes der eingangs genannten Art, der nicht die Nachteile der bestehenden Roste aufweist.

Diese Aufgabe ist erfindungsgemäss durch die Merkmale im Kennzeichnungsteil des ersten Patentanspruches gelöst.

Ausführungsformen sind in den abhängigen Ansprüchen umschrieben.

Gegenüber den bestehenden Ausführungen hat der vorliegende Rost die folgenden Vorteile:
- er ist sowohl am Kamin in der Wohnstube als auch im Garten einsetzbar,
- er ist einhändig betätigbar, wobei der Griff immer in einer horizontalen Ebene liegt,
- sein Schwenkradius ist bei Bedarf erweiterbar,
- er ist für Ergänzung mit einer Warmhalteplatte vorgesehen,
- der Griff bleibt, wie der Rost in jeder Rostposition, in einer horizontalen Ebene.

Nachfolgend werden Ausführungsbeispiele des erfindungsgemässen Rosts anhand der Zeichnung erläutert. Es zeigen:
Gegenüber bestehenden Ausführungen hat der erfindungsgemässe Bratrost u.a. die folgenden Vorteile:
- er ist nicht an einen bestimmten Grilltyp gebunden,
- er kann von einem Halter am Kamin in der Wohnstube in einen Halter am Balkon oder im Garten bewegt werden,
- er ist an einem Fuss überall aufstellbar,
- er ist in der Höhe verstellbar, indem die Drehachse nach Bedarf verlängert oder verkürzt wird,
- er ist bis zum Boden einer Feuerstelle bzw. eines Kamins absenkbar und in der Höhe verstellbar, ohne dass sich die Bedienungsperson bücken oder strecken muss, und
- er kann mit einem beabstandeten Wärmerost ausgestattet werden, der es erlaubt, das Bratgut bis zum Verzehr warm zu halten.

In der vorgesehenen Ausführungsform ist der Bratrost mittels einer Parallelogramvorrichtung in horizontaler Lage bei jeder Bewegung sowohl vertikal als auch horizontal bewegbar. Über ein Gestänge lässt sich der Bratrost in jede erwünschte Position zum Be- und Entladen des Rostes und zur Begutachtung des Bratgutes bringen. Der Bratrost bleibt in jeder eingestellten Position bis er wieder betätigt wird. Zur Halterung in einer bestimmten horizontalen Position kann eine Arretiervorrichtung vorgesehen werden, die z.B. aus einem Zacken besteht, der in eine Zahnstange eingreift und mittels eines Hebels am Betätigungsgriff manipuliert werden kann.

Nachfolgend wird ein Ausführungsbeispiel des erfindungsgemässen Bratrostes anhand der Zeichnung näher erläutert. Es zeigen:
- Fig. 1: eine Draufsicht eines Bratrostes in verschiedenen Positionen über und neben dem Feuer,
- Fig. 2: eine Seitenansicht des Bratrostes in drei verschiedenen Höhenpositionen,
- Fig. 3: eine auseinanderliegende Darstellung der drei Positionen in Fig. 2,
- Fig. 4: eine Zusammenstellung der Ausführung gemäss Fig. 3,
- Fig. 5: eine Ausführung mit einem fest angeordneten Trägerarm.
- Fig. 6/1: wie Fig. 2, jedoch mit einem nach unten versetzten Rostgitter,

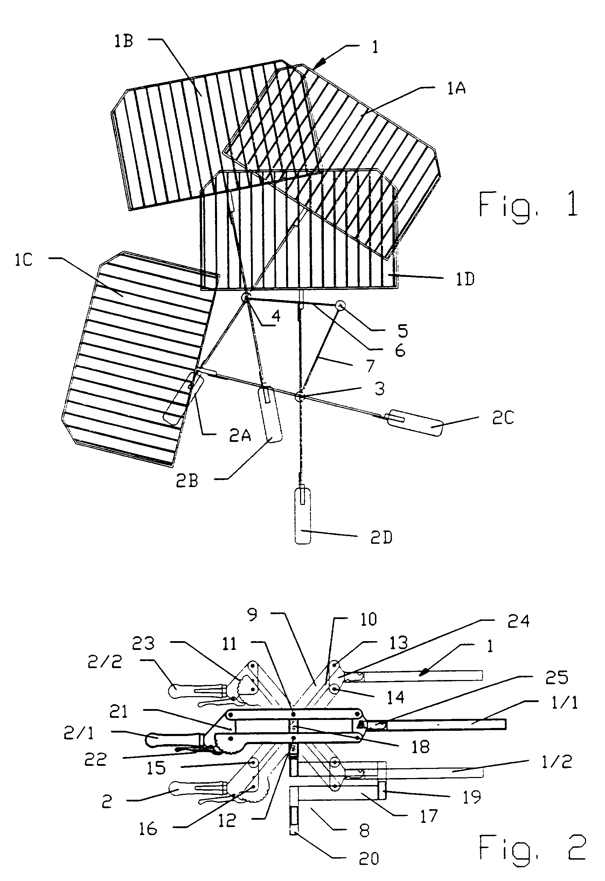

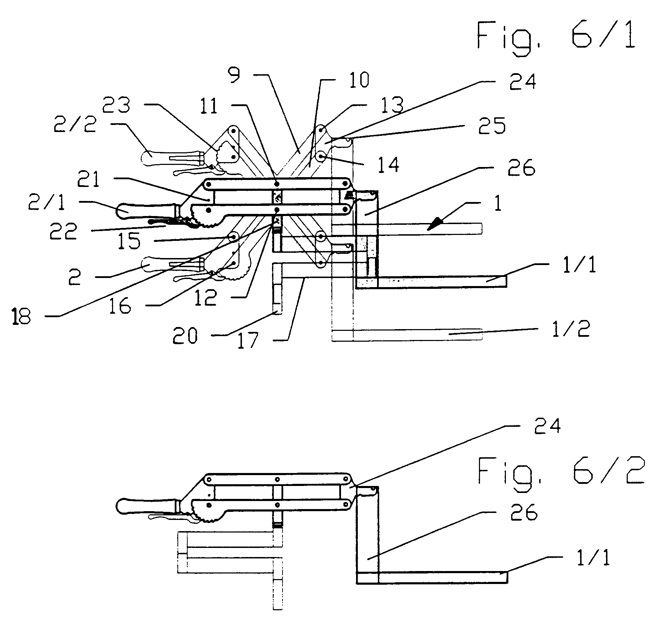

- Fig. 6/2: wie Fig. 6/1, jedoch mit nur einer Gitterstellung,

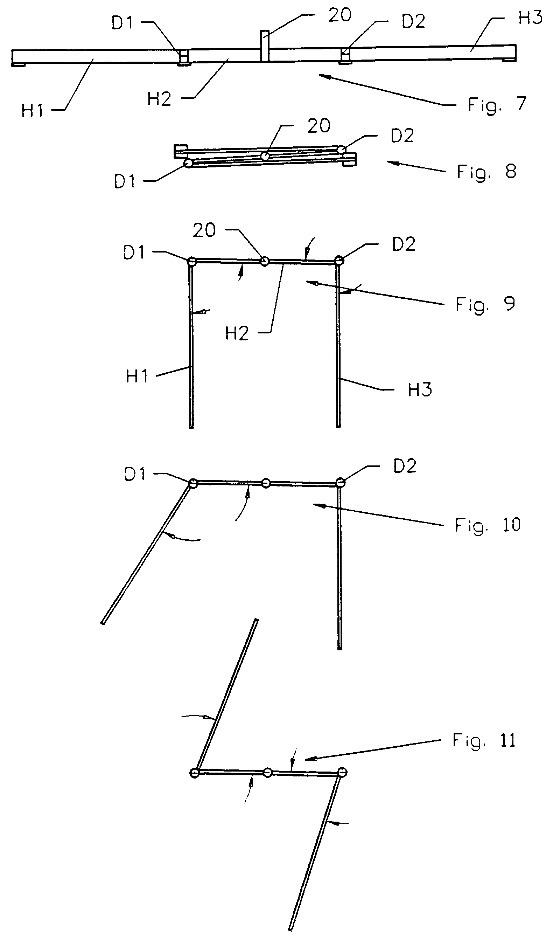

- Fig. 7: einen Tragfuss für den Bratrost, ausgefaltet,
- Fig. 8: wie Fig. 7, jedoch zusammengefaltet,
- Fig. 9-11: den Tragfuss nach Fig. 7 in verschiedenen Anordnungen, und

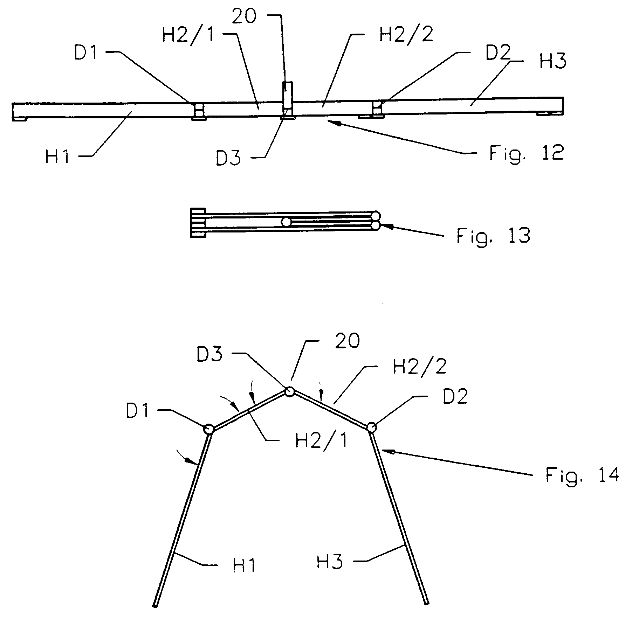

- Fig. 12-17: eine Variante zum Tragfuss nach Fig. 7 bis 11.

In Fig. 1 ist ein Bratrost 1 in verschiedenen Positionen 1A bis 1D und mit einem Griff 2 in entsprechenden Positionen 2A bis 2D gezeigt. Die beiden Positionen C und D haben einen gemeinsamen Drehpunkt 3, und die Positionen A und B einen gemeinsamen Drepunkt 4. Zwei Tragstangen 6 und 7 verbinden die beiden Drehpunkte 3 und 4 über einen Schwenkpunkt 5. Dies bedeutet, dass die beiden Tragstangen 6 und 7 zusammengeklappt oder auseinandergeschwenkt verwendet werden können, wobei der Bratrost 1 in der auseinandergeschwenkten Position einen viel grösseren Radius beschreiben kann als in der zusammengeklappten Position. Zur Erweiterung des Bereiches muss lediglich eine nicht gezeigte Schraube im Gelenk oder Drehpunkt 5 gelöst werden, wobei die Standfestigkeit der Tragvorrichtung 8 (Fig. 8) zu berücksichtigen ist.

Fig. 2 zeigt die Vorrichtung zum Heben und Senken des Bratrosts 1,1' und 1'' mittels des Griffes 2,2' und 2''. Diese Vorrichtung umfasst zwei parallele Träger 9 und 10, die um zwei Lager 11 und 12 drehbar sind und somit bewirken, dass sowohl der Bratrost als auch der Griff 2 sich immer in der horizontalen Stellung befinden. Wenn der Griff 2 nach unten bewegt wird, geht der Bratrost 1 nach oben, so dass das Bratgut weniger stark gebraten wird. Der Griff 2 dient somit bei einer vertikalen Bewegung zur Regulierung der auf das Bratgut einwirkenden Wärmestrahlung.

Die Tragvorrichtung 8 besteht aus einem vertikalen Arm 18, an dem die beiden Träger 9 und 10 drehbar befestigt sind. Zuunterst ist der Arm 18 starr an einem horizontalen Hebel 17 befestigt, und dieser wiederum ist mit einem Drehzapfen 19 fest verbunden, der in einer Buchse 20 drehbar gelagert ist. Der Hebel 17 kann aus einem Stück oder, wie bereits erwähnt aus zwei auseinander schwenkbaren Tragstangen 6 und 7 bestehen. Im letztgenannten Falle wird der Schwenkradius um die Länge des Hebels 17 vergrössert. Im erstgenannten Falle fallen die beiden Drehpunkte 3 und 4 zusammen. Der Winkel zwischen den beiden Tragstangen 6 und 7 kann mittels einer Klemmvorrichtung nach Wunsch eingestellt werden.

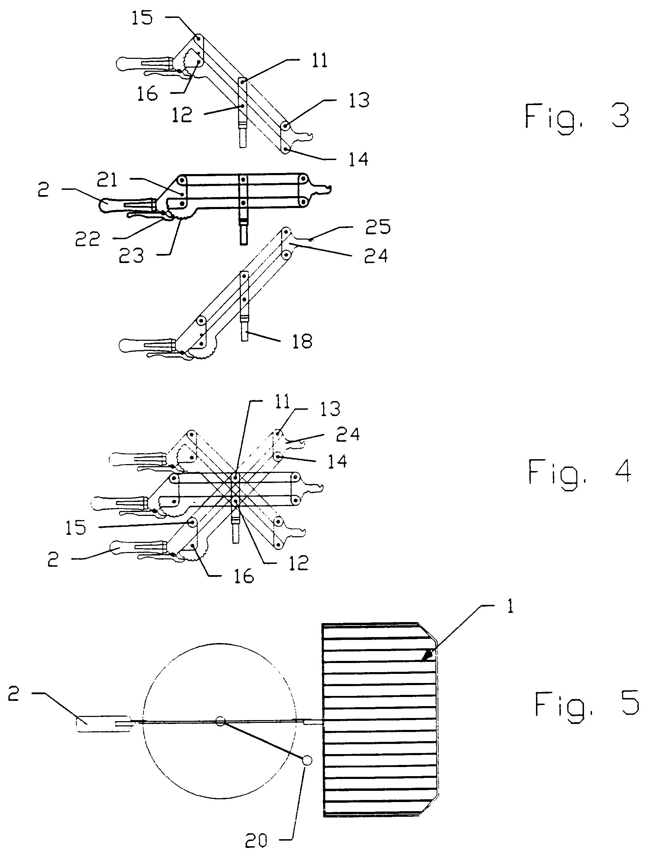

Fig. 3 und 4 zeigen eine schematische, auseinanderliegende Anordnung des Parallelogramms in der mittleren Lage und den beiden Endpositionen, jedoch ohne den Bratrost 1, wogegen Fig. 5 die kreisförmige Bewegung des Bratrostes 1 in bezug auf die Buchse 20 darstellt.

In Fig. 6 (I und II) ist eine Ausführung gezeigt, die beispielsweise über ein Kamin-Schutzgitter nach innen versenkbar ist, damit das Bratgut einer passenden Wärme ausgesetzt werden kann. Bei dieser Ausführung ist eine Bedienung des Bratgutes in aufrechter Stellung der Bedienungsperson gut möglich, was den Bratvorgang erleichtert. Diese Ausführung ist insbesondere für tiefliegende Wärmequellen, wie beispielsweise Innenraum-Kamine, möglich.

Der grosse Vorteil der hier beschriebenen Anordnung gegenüber bestehenden Ausführungen besteht darin, dass der Bratrost in einfacher Weise im und ausserhalb des Wärmebereiches viel weiter bewegbar ist, so dass der Bratrost viel leichter zu be- und entladen ist. Wärmeintensive Stellen des Gartengrills können den dicksten Fleischbrocken und die nur leicht zu erwärmenden Speisen den am schwachsten erwärmten Stellen zugeordnet werden.

Zum Entladen kann der Bratrost bis zur Kante eines Esstisches herangeschwenkt werden, so dass die Partygäste sich direkt bedienen können.

Bei der Ausführung gemäss Fig. 6 kann der Bratrost oben mit einem Warmhalterost versehen werden. Dieser Warmhalterost hat den Vorteil, dass das Bratgut immer unter der Einwirkung der Wärme der Holzkohle steht und deshalb auch dann nicht den speziellen Holzkohlengeschmack verliert, wenn es nicht sofort nach Beendigung des Bratvorganges verzehrt wird. Dies hat zur Folge, dass das Bratgut während längerer Zeit den typischen Holzkohlengeschmack beibehält. Gleichzeitig verhindern der Abstand zur Wärmequelle und die Abschirmung durch das auf dem eigentlichen Bratrost aufliegende Bratgut, dass dem Warmhaltegut zu starke Wärme zugeführt wird.

Als Stütze für den Bratrost können Halter am Balkon, im Garten oder in der Stube befestigt werden, so dass der Bratrost je nach Bedarf von einem zum anderen bewegt werden kann. In der Weise ist der Bratrost universell verwendbar und in kürzester zeit aufstellbar.

Ein weiterer Halter kann ferner aus einem Betonfuss derjenigen Art bestehen, welche für Sonnenschirme benutzt wird, oder zusätzlich an einem solchen Fuss montiert werden.

In den Fig. 7 bis 14 ist ein aufklappbarer Fuss dargestellt, der in verschiedenen Anordnungen verwendbar ist, die z.B. auch noch vom Gelände abhängig sein können.

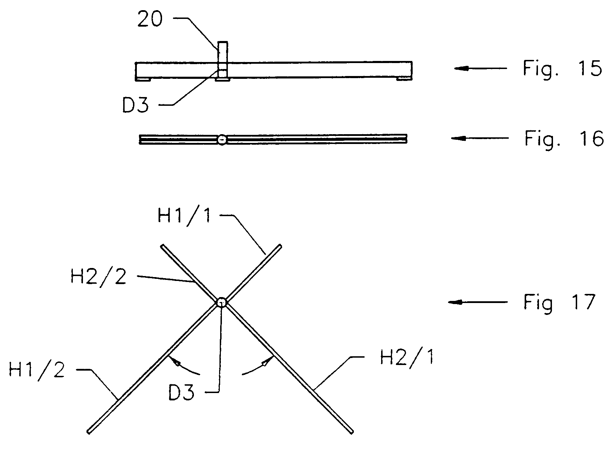

Die Fig. 15 bis 17 zeigen eine abweichende Ausführung desjenigen Fusses, welcher in den Fig. 7 bis 14 gezeigt ist.

Ferner besteht im freien Gelände die Möglichkeit einen Fuss in der Form eines Rohres zu verwenden, das in die Erde eingesteckt oder eingeschlagen wird.

## Patentansprüche

1. Bratrost für offene Feuerstellen, wie Kamine und Gartengrille, der mittels eines einzigen Griffes (2) horizontal und vertikal über eine Parallelogrammvorrichtung (9-16) bewegbar ist, der bei jeder räumlichen Bewegung in der horizontalen Lage verbleibt, und der in jeder vertikalen Stellung mittels einer Arretiervorrichtung arretierbar ist, wobei die Parallelogrammvorrichtung (9-16) zwei parallele Träger (9,10) einschliesst, die jeweils über Lager (11,12) an einem vertikalen Arm (18) drehbar angeordnet sind, **dadurch gekennzeichnet,** dass der drehbare Arm (18) über einen horizontalen Schwenkhebel (17) und einen vertikalen Drehzapfen (19) in einer Buchse (20) schwenkbar gelagert ist, dass der Griff (2) bei jeder Bratrostlage einhändig betätigbar ist, und dass die horizontale Ausrichtung des Griffes (2) in jeder Bratrostposition unverändert bleibt.

2. Bratrost nach Anspruch 1, dadurch gekennzeichnet, dass der Schwenkhebel (17) zur Erweiterung des Schwenkradius aus zwei auseinanderklappbaren Tragstangen (6,7) zusammengesetzt ist, die in einem Schwenkpunkt (5) miteinander verbunden und darin mittels einer Klemmvorrichtung verklemmbar sind.

3. Bratrost nach Anspruch 1 oder 2, dadurch gekennzeichnet, dass die Arretiervorrichtung ein feststehendes, halbkreisförmiges Zahnrad einschliesst, in das ein verstellbarer Haken mittels eines Übertragungsmittels eingreift.

4. Bratrost nach Anspruch 3, dadurch gekennzeichnet, dass das Übertragungsmittel aus einem Kabelzug besteht.

5. Bratrost nach einem der Ansprüche 1 bis 4, dadurch gekennzeichnet, dass die Buchse (20) an einem Gartengrill oder einem Kamin befestigt ist.

6. Bratrost nach einem der Ansprüche 1 bis 5, dadurch gekennzeichnet, dass die Buchse (20) an einem unabhängigen, frei bewegbaren Ständer mit hoher Kippfestigkeit angeordnet ist.

7. Bratrost nach einem der Ansprüche 1 bis 6, dadurch gekennzeichnet, dass die Buchse (20) an einem zusammenlegbaren, aus Platten bestehenden Fuss angeordnet ist.

8. Bratrost nach einem der Ansprüche 1 bis 7, dadurch gekennzeichnet, dass der Schwenkbereich des Griffes in vertikaler Richtung einstellbar ist.

9. Bratrost nach einem der Ansprüche 1 bis 8, dadurch gekennzeichnet, dass er in erhöhter Position mit einem Warmhalterost für das fertige Bratgut ausgestattet ist.

## Claims

1. Gridiron for open fires, as fireplaces and outdoor grills, movable horizontally and vertically by means of a single handle (2) and a parallelogramm device (9-16), so that the handle (2) remains in horizontal position during such spatial movements, and which is lockable in any vertical position by means of a locking device, whereas said parallelogramm device (9-16) is including two parallel supports (9,10) rotatable in bearings (11,12) on a vertical lever (18), characterized in that said lever (18) is supported via a horizontal rocking lever (17) and a vertical rotating pivot (19) and is swingable supported in a bushing (20), that the handle (2) is operatable by one hand only, and that the horizontal orientation of the handle (2) remains unchanged in all positions of the gridiron.

2. Gridiron according to claim 1, characterized in that the rocking lever (17) for an increased swivel radius consists of two unfoldable support rods (6,7), interconnected in a swivel point (5), where they are lockable by means of a positioning device (22,23).

3. Gridiron according to claim 1 or 2, characterized in that the positioning device comprises a stationary semicircular gear (23), in which a movable hook (22) engages by means of transmission means.

4. Gridiron according to claim 3, characterized in that the transmission means is a cable.

5. Gridiron according to one of the claims 1 to 4, characterized in that the bushing (20) is mounted on an outdoor grill or a fireplace.

6. Gridiron according to one of the claims 1 to 5, characterized in that the bushing (20) is mounted on an independent, freely movable support with high tilt resistance.

7. Gridiron according to one of the claims 1 to 6, characterized in that the bushing (20) is placed on a collapsible foot consisting of plates (Figs. 7 - 11).

8. Gridiron according to one of the claims 1 to 7, characterized in that the swivel range of the handle (2) in vertical direction is adjustable.

9. Gridiron according to one of the claims 1 to 8, characterized in that it is equipped with a hot-keeping grid for the finished food located above the grid level.

## Revendications

1. Gril pour foyers ouverts, tels que des âtres et des barbecues, qui est déplaçable horizontalement et verticalement au moyen d'une seule poignée (2) par l'intermédiaire d'un dispositif en forme de parallélogramme (9-16) et reste en position horizontale quel que soit son mouvement dans l'espace, et qui peut être arrêté dans n'importe quelle position verticale au moyen d'un dispositif d'arrêt, tandis que le dispositif en forme de parallélogramme (9-16) comprend deux supports parallèles (9,10) qui sont disposés chacun de façon orientable au-dessus d'appuis (11,12) sur un bras vertical (18), caractérisé en ce que le bras orientable (18) s'étend, en pouvant pivoter, au-dessus d'un levier pivotant horizontal (17) et d'un pivot vertical (19) dans un coussinet (20), que la poignée (2) peut être actionnée d'une seule main pour chaque position du gril, et que l'orientation de la poignée (2) reste la même dans toutes les positions du gril.

2. Gril selon la revendication 1, caractérisé en cc que le levier pivotant (17) pour l'extension du rayon de pivotement est composé de deux barres supports rabattables l'une par rapport à l'autre (6,7), qui sont reliées entre elles en un point de pivotement (5) et peuvent y être bloquées au moyen d'un dispositif de serrage.

3. Gril selon l'une des revendications 1 ou 2, caractérisé en ce que le dispositif d'arrêt comprend une roue dentée semi-circulaire, fixe, dans laquelle un crochet ajustable s'engrène par l'intermédiaire d'un moyen de transmission.

4. Gril selon la revendication 3, caractérisé en ce que le moyen de transmission consiste en une traction de câble.

5. Gril selon l'une quelconque des revendications 1 à 4, caractérisé en ce que le coussinet (20) est fixé à un barbecue ou à un être.

6. Gril selon l'une quelconque des revendications 1 à 5, caractérisé en ce que le coussinet (20) est disposé sur un montant indépendant, se déplaçant librement, avec stabilité élevée vis-à-vis du basculement.

7. Gril selon l'une quelconque des revendications 1 à 6, caractérisé en ce que le coussinet (20) est disposé sur un pied repliable, composé de plaques.

8. Gril selon l'une quelconque des revendications 1 à 7, caractérisé en ce que l'ampleur du pivotement de la poignée peut être ajustée dans la direction verticale.

9. Gril selon l'une quelconque des revendications 1 à 8, caractérisé en ce qu'il est muni en position élevée d'une grille de maintien en température pour le produit fini de cuire.
